(19) Europäisches Patentamt
European Patent Office
Office européen des brevets

(11) **EP 3 250 356 B1**

(12) **EUROPÄISCHE PATENTSCHRIFT**

(45) Veröffentlichungstag und Bekanntmachung des Hinweises auf die Patenterteilung:
**20.11.2019** Patentblatt **2019/47**

(21) Anmeldenummer: **16701533.8**

(22) Anmeldetag: **26.01.2016**

(51) Int Cl.:
*B29C 45/00* (2006.01)     *B29C 45/78* (2006.01)
*B29K 311/10* (2006.01)     *B29K 101/12* (2006.01)
*B29B 7/90* (2006.01)     *B29B 15/08* (2006.01)

(86) Internationale Anmeldenummer:
**PCT/EP2016/051601**

(87) Internationale Veröffentlichungsnummer:
**WO 2016/120285 (04.08.2016 Gazette 2016/31)**

(54) **VERFAHREN ZUR HERSTELLUNG EINES SPRITZGUSSPRODUKTES, ENTSPRECHENDES SPRITZGUSSPRODUKT SOWIE VERWENDUNG SPEZIELL ZUBEREITETER SONNENBLUMENSCHALENFASERN ALS ADDITIV**

PROCESS FOR MANUFACTURING AN INJECTION MOULDED PRODUCT, SUCH AN INJECTION MOULDED PRODUCT AND USE OF SPECIALLY PROCESSED SUNNFLOWER SEED FIBERS AS AN ADDITIVE

PROCÉDÉ DE FABRICATION UN PRODUIT DE MOULAGE PAR INJECTION, UN TEL PRODUIT DE MOULAGE PAR INJECTION ET UTILISATION DE FIBRE DES SEMENCES DE TOURNESOL TRAITANT SPÉCIELLEMENT COMME ADDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.01.2015 DE 102015201386**

(43) Veröffentlichungstag der Anmeldung:
**06.12.2017** Patentblatt **2017/49**

(73) Patentinhaber: **SPC Sunflower Plastic Compound GmbH**
**49681 Garrel (DE)**

(72) Erfinder:
• **MEYER, Ulrich**
**49681 Garrel (DE)**
• **MEYER, Sebastian**
**58675 Hemer (DE)**
• **TRUMME, Reinhard**
**49413 Dinklage (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**WO-A1-2013/072146     WO-A1-2014/184273**

**Beschreibung**

Die vorliegende Erfindung betrifft ein Verfahren zur Herstellung eines Spritzgussproduktes, ein entsprechendes Spritzgussprodukt (welches nach dem erfindungsgemäßen Verfahren herstellbar ist) sowie die Verwendung von auf spezielle Weise zubereiteten Sonnenblumenschalenfasern als Additiv in einem spritzgießfähigen Kompositwerkstoff.

Spritzgießverfahren gehören zu den am häufigsten verwendeten Verfahren für die Herstellung von Produkten aus Kunststoff beziehungsweise Kunststoff-Kompositen. Beim Spritzgießen werden üblicherweise Kunststoff- beziehungsweise Komposit-Granulate durch Erhitzen plastifiziert. Das jeweilige Granulat wird dazu üblicherweise in eine Spritzeinheit einer Spritzgießmaschine eingefüllt, welche eine Schneckenwelle sowie einen Schneckenzylinder umfasst. Der Schneckenzylinder wird beim Thermoplast-Spritzgießen erwärmt, sodass das Granulat einerseits mittels der Schneckenwelle in Richtung eines Spritzgießwerkzeugs befördert und andererseits innerhalb der Spritzeinheit plastifiziert wird. Der plastifizierte Kunststoff beziehungsweise Kompositwerkstoff verlässt die Spritzeinheit durch eine Düse, die den Übergang zum Spritzgießwerkzeug bildet. Dabei kommt es aufgrund einwirkender Scherkräfte zu einem weiteren Temperaturanstieg innerhalb des plastifizierten Werkstoffs. Für eine detaillierte Darstellung üblicher Spritzgießmaschinen und ihrer technischen Bauteile sei auf die Fachliteratur verwiesen.

Das abgekühlte und entformte Produkt eines Spritzgießverfahrens ist ein Spritzgussprodukt, dessen Fertigungsgenauigkeit von verschiedenen Parametern abhängt. Insbesondere ist die Steuerung der Abkühlvorgänge und die Wahl des eingesetzten Kunststoffes entscheidend für die Fertigungsgenauigkeit, denn Kunststoffe und Kompositwerkstoffe unterliegen je nach Abkühlgeschwindigkeit einer unterschiedlich starken Schwindung. Das heißt, durch Spritzgießen hergestellte geformte Kompositwerkstoffe beziehungsweise geformte Werkstoffe aus Kunststoff unterliegen einer Volumenänderung, ohne dass hierfür Material entfernt oder Druck ausgeübt werden müsste. Das Phänomen des Schwindens betrifft hierbei insbesondere teilkristalline Kunststoffe. Generell gilt, dass sich bei langsamerem Abkühlen die Moleküle des im Spritzgießwerkzeug geformten Werkstoffs besonders gut in ein vergleichsweise kleines Volumen einfügen, während bei schnellem Abkühlen diese Fähigkeit verringert ist, sodass bei langsamerer Abkühlung eine stärkere Schwindung resultiert als bei schneller Abkühlung. Bei der Formgebung von Produkten auf Basis von Kompositwerkstoffen oder Kunststoffen wird das Phänomen des Schwindens regelmäßig bereits bei der Gestaltung des Spritzgießwerkzeugs berücksichtigt. Besondere Aufmerksamkeit richtet der Fachmann dabei auf dickwandige Bereiche eines Produktes, denn insbesondere in solchen dickwandigen Bereichen (Bereichen von Masseanhäufungen) kann es zu beträchtlichen Volumenkontraktionen, d.h. Einfallstellen, kommen.

Als Stand der Technik wird auf die Dokumente WO 2013/ 072 146 A1 und WO 2014/ 184 273 A1 hingewiesen.

Bislang wird häufig versucht, dem Entstehen von Einfallstellen und anderen auf dem Phänomen des Schwindens beruhenden Produktfehlern dadurch zu begegnen, dass ein besonders hoher Verdichtungsdruck und eine hohe Verdichtungszeit gewählt werden. Der Verdichtungsdruck kann auch als Nachdruck bezeichnet werden, die Verdichtungszeit als Nachdruckzeit.

Bei häufig eingesetzten teilkristallinen Kunststoffen wie Polypropylen und Polyethylen beträgt das Schwindmaß typischerweise 1,5 bis 2 %. Da ein solches Schwindmaß in der Regel inakzeptabel ist, wird auf die vorstehend genannte Weise und/oder durch Zusatz von Additiven wie zum Beispiel Füllstoffen (z.B. $CaCO_3$ oder Talkum) versucht, dem Schwinden entgegenzuwirken. Dieses Vorgehen führt in der Regel zu anderen Nachteilen, wie zum Beispiel erhöhter Maschinenverschleiß durch die erwähnten mineralischen Füllstoffe oder lange Zykluszeiten durch längere Nachdruckzeiten (Verdichtungszeiten) und damit verbundene höhere Bauteilkosten. Der hiermit verbundene Aufwand ist jedoch häufig sehr hoch und führt auch nicht zuverlässig zu Resultaten, die vom Verbraucher akzeptiert werden.

Für besondere Anwendungsgebiete werden daher Kunststoffe beziehungsweise Kompositwerkstoffe auf Basis solcher Kunststoffe eingesetzt, die nur ein besonders geringes Schwindungsverhalten zeigen; insoweit bieten sich insbesondere die sogenannten amorphen Kunststoffe an, unter denen Acrylnitril-Butadien-Styrol (ABS) häufig bevorzugt ist.

Es besteht ein beständiger Bedarf an Maßnahmen, Rezepturen und dergleichen, die zu schwindungsarmen Spritzgussprodukten führen.

Es war daher eine primäre Aufgabe der vorliegenden Erfindung, ein Verfahren zur Herstellung eines Spritzgussproduktes anzugeben, welches dazu beiträgt, dass das hergestellte Spritzgussprodukt nur in geringem Maße, und vorzugsweise gar nicht, einer Schwindung unterliegt.

Vorzugsweise sollte das anzugebende Verfahren unabhängig vom gewählten Kunststoffmaterial sein, wobei jedoch angesichts der besonderen Herausforderungen, die mit dem Einsatz teilkristalliner Kunststoffe verbunden sind, das Verfahren vorzugsweise dazu geeignet sein sollte, schwindungsarme Spritzgussprodukte auf Basis solcher teilkristallinen Kunststoffe herzustellen.

Das anzugebende Verfahren sollte es vorzugsweise auch ermöglichen, Probleme zu lindern oder zu verhindern, die durch sogenannte Einfallstellen an Spritzgussprodukten auftreten.

Es war eine weitere Aufgabe der vorliegenden Erfindung, ein entsprechendes Spritzgussprodukt anzugeben.

Schließlich war es ebenfalls eine weitere Aufgabe der vorliegenden Erfindung, besonders geeignete Additive anzugeben, die als Bestandteil eines spritzgießfähigen Kompositwerkstoffs eingesetzt werden können und deren Funktion darin besteht, die Schwindung beim maschinellen Spritzgießen eines solchen Kompositwerkstoffs in ein Spritzgießwerkzeug zu vermindern.

Die primäre Aufgabe der vorliegenden Erfindung wird gelöst durch ein Verfahren zur Herstellung eines Spritzgussproduktes, umfassend die folgenden Schritte:

(a) Verarbeiten von Sonnenblumenschalen zu Sonnenblumenschalenfasern, bei einer maximalen Temperatur $T_{PFmax}$ von weniger als 200 °C,

(b) Herstellen eines spritzgießfähigen Kompositwerkstoffs durch Vermischen der in Schritt (a) hergestellten Sonnenblumenschalenfasern mit einem Kunststoffmaterial, bei einer maximalen Temperatur $T_{PCmax}$ von weniger als 200 °C,

(c) maschinelles Spritzgießen des hergestellten spritzgießfähigen Kompositwerkstoffs in ein Spritzgießwerkzeug, so dass ein geformter Kompositwerkstoff resultiert, wobei der in das Spritzgießwerkzeug eingebrachte Kompositwerkstoff in zumindest einem Abschnitt des Spritzgießwerkzeugs eine Temperatur $T_{IM}$ von größer als 200 °C besitzt,

(d) Entformen des geformten Kompositwerkstoffs, so dass das Spritzgussprodukt resultiert.

Der Einsatz von Sonnenblumenschalenfasern als Additiv (Zusatzstoff) für spezifische Kunststoffe ist bereits aus dem Dokument WO 2014/184273 A1 bekannt, welches auch ein Spritzgießverfahren offenbart.

Das Dokument WO 2013/072146 A1 offenbart bereits den Einsatz des Spritzgießens von Biowerkstoffen beziehungsweise Biokompositen auf Basis von Sonnenblumenkernschalen/-hülsen. Kunststoffmaterialien können dabei mit den besagten Sonnenblumenkernschalen/-hülsen compoundiert werden. Das Dokument offenbart auch den Einsatz spezifischer Kunststoffmaterialien.

Die genannten Dokumente WO 2013/072146 sowie WO 2014/184273 betreffen nicht das Problem der Schwindung von Spritzgussprodukten und geben keine Maßnahmen an, die im Zusammenhang mit den jeweils offenbarten Spritzgusswerkstoffen zu treffen wären, um eine Schwindung zu vermeiden oder zu reduzieren.

Überraschenderweise hat sich in eigenen Untersuchungen gezeigt, dass Sonnenblumenschalenfasern bei geeigneter Vorbehandlung so als Additiv mit einem Kunststoffmaterial vermischt werden können, dass sie beim maschinellen Spritzgießen bewirken, dass das resultierende Spritzgussprodukt einer nur geringen und daher akzeptablen Schwindung unterliegt. Es hat sich insoweit als wesentlich herausgestellt, dass die Sonnenblumenfasern bei einer Temperatur von unter 200 °C aus Sonnenblumenschalen hergestellt werden, sodass solche Bestandteile der Sonnenblumenschalenfasern beim Verarbeitungsprozess intakt bleiben, die bereits bei einer Temperatur von knapp über 200 °C unter Bildung gasförmiger Produkte zersetzt würden.

Schritt (a) des erfindungsgemäßen Verfahrens betrifft das Verarbeiten von Sonnenblumenschalen zu Sonnenblumenschalenfasern, bei einer maximalen Temperatur $T_{PFmax}$ von weniger als 200 °C; eine maximale Temperatur $T_{PFmax}$ von 150 °C ist bevorzugt, besonders bevorzugt ist eine maximale Temperatur $T_{PFmax}$ von 100 °C.

Die in Schritt (a) des erfindungsgemäßen Verfahrens resultierenden Sonnenblumenschalenfasern (als Ergebnis des Verarbeitens von Sonnenblumenschalen) umfassen somit intakte Bestandteile, die bei einer Temperatur von knapp über 200 °C unter Freisetzung von Gasen zersetzt würden. Es ist eine wesentliche Leistung der vorliegenden Erfindung, erkannt zu haben, dass dieses Potential von Sonnenblumenschalenfasern (Zersetzung von Bestandteilen unter Freisetzung von Gasen) genutzt werden kann, um die Schwindung entsprechender Kunststoffprodukte zu reduzieren.

Eigene Untersuchungen haben gezeigt, dass Sonnenblumenschalenfasern bei Temperaturen von unter 200 °C zwar gut getrocknet werden können (was häufig erwünscht ist), sich die Bestandteile der Sonnenblumenschalenfasern (vermutlich insbesondere die ligninhaltigen Bestandteile) jedoch bei einer Temperatur von unter 200 °C nicht signifikant zersetzen. Die eigenen Untersuchungen haben zudem gezeigt, dass überraschenderweise ab einer Temperatur von 200 °C eine irreversible Zersetzung von Bestandteilen von Sonnenblumenschalenfasern stattfindet, die im beträchtlichen Maße zur Freisetzung von Gasen führt.

Gemäß Schritt (b) eines erfindungsgemäßen Verfahrens wird ein spritzgießfähiger Kompositwerkstoff hergestellt durch Vermischen der in Schritt (a) hergestellten Sonnenblumenschalenfasern (das heißt der auf schonende Weise hergestellten Sonnenblumenschalenfasern, welche Bestandteile umfassen, die bereits bei einer Temperatur von knapp über 200 °C zersetzt werden können) mit einem Kunststoffmaterial. Hierbei wird gemäß Schritt (b) des erfindungsgemäßen Verfahrens darauf geachtet, dass das Vermischen bei einer maximalen Temperatur $T_{PCmax}$ von weniger als 200 °C erfolgt. Eine maximale Temperatur $T_{PCmax}$ von 190 °C ist bevorzugt, besonders bevorzugt ist eine maximale Temperatur $T_{PCmax}$ von 170 °C.

Somit wird nicht nur in Schritt (a), sondern auch beim Vermischen der Sonnenblumenschalenfasern mit dem Kunststoffmaterial und damit bei der Herstellung des spritzgießfähigen Kompositwerkstoffs vermieden, dass in signifikantem Ausmaß Bestandteile der Sonnenblumenschalenfasern unter Bildung von Gasen zersetzt werden. Das Potential der Sonnenblumenschalenfasern, gasförmige Zersetzungsprodukte freizusetzen, wird somit erfindungsgemäß auch in Verfahrensschritt (b) bewahrt.

In Schritt (c) des erfindungsgemäßen Verfahrens erfolgt das maschinelle Spritzgießen des hergestellten spritzgießfähigen Kompositwerkstoffs in ein Spritzgießwerkstoff, sodass ein geformter Kompositwerkstoff resultiert. Hierbei wird nun erfindungsgemäß im bewussten Unterschied zu der Vorgehensweise in den Schritten (a) und (b) eine höhere Temperatur eingestellt, sodass der in das Spritzgießwerkzeug eingebrachte Kompositwerkstoff in zumindest einem Abschnitt des Spritzgießwerkzeugs (vorzugsweise in mehreren Abschnitten) eine Temperatur $T_{IM}$ von größer als 200 °C besitzt, vorzugsweise von größer als 220 °C. Eine solche Temperatur wird in einem erfindungsgemäßen Verfahren häufig während des Einspritzens in das Spritzgießwerkzeug durch Einwirken von Scherwärme auf den bereits in der Spritzeinheit vorerhitzten plastifizierten Kompositwerkstoff erreicht. Aufgrund der in Verfahrensschritt (c) in zumindest einem Abschnitt des Spritzgießwerkzeugs eingestellten Temperatur $T_{IM}$ von größer als 200 °C (vorzugsweise von größer als 220 °C) zersetzen sich dort nunmehr die ligninhaltigen Bestandteile, sodass sich Zersetzungsgase bilden, welche als Blasen in den geformten Kompositwerkstoff eingebettet werden und somit einen Teil des Innenvolumens des Spritzgießwerkzeugs ausfüllen. Beim Abkühlen und Erstarren des geformten Kompositwerkstoffs bleiben die Blasen regelmäßig im erstarrten Kompositwerkstoff eingeschlossen. Auf diese Weise wird dem vorstehend beschriebenen Phänomen des Schwindens des geformten Kompositwerkstoffs entgegengewirkt. Bezogen auf ein vorgegebenes Spritzgießwerkzeug und ein vorgegebenes Kunststoffmaterial wird der Fachmann anhand weniger Vorversuche ermitteln, welche Mengen von vorbereiteten Sonnenblumenschalenfasern erforderlich sind, um ein Schwinden vollständig oder im gewünschten Maße zu verhindern.

In Schritt (d) des erfindungsgemäßen Verfahrens wird der geformte Kompositwerkstoff entformt, sodass das Spritzgussprodukt resultiert. Das auf erfindungsgemäße Weise hergestellte Spritzgussprodukt weist eine nur geringfügige Schwindung auf, insbesondere im Vergleich mit einem Spritzgussprodukt, das bei ansonsten identischer Verfahrensgestaltung unter Einsatz von Sonnenblumenschalenfasern hergestellt wurde, welche bei einer maximalen Temperatur von mehr als 200 °C aus Sonnenblumenschalen gewonnen wurden.

Nach dem erfindungsgemäßen Verfahren hergestellte Spritzgussprodukte zeichnen sich insbesondere dadurch aus, dass sie auch im Bereich dickwandiger Teile keine oder allenfalls schwach ausgeprägte Einfallstellen aufweisen. Im Vergleich mit Spritzgussprodukten, welche zu Vergleichszwecken auf ansonsten identischem Wege, jedoch unter Verwendung von Sonnenblumenschalenfasern, die bei einer Temperatur von größer als 200 °C aus Sonnenblumenschalen erhalten wurden, besitzen die erfindungsgemäßen Spritzgussprodukte aufgrund des Anteils an Blasen im Produkt ein geringeres Bauteilgewicht. Die Festigkeit der nach dem erfindungsgemäßen Verfahren herstellten Spritzgussprodukte ist dabei regelmäßig nicht beeinträchtigt. Da die Zersetzung der zersetzbaren Bestandteile der Sonnenblumenschalenfasern temperaturabhängig ist und ohne weitere Maßnahmen im Spritzgusswerkzeug selbstständig abläuft, können nach dem erfindungsgemäßen Verfahren Spritzgussprodukte mit geringeren Zykluszeiten hergestellt werden. Es ist nämlich nicht erforderlich, zeitlich aufwändige Nachdruckzeiten oder Restkühlzeiten einzuhalten, wie sie bislang insbesondere bei der Herstellung dickwandiger Teile üblich sind, da durch die sich zersetzenden Bestandteile der Sonnenblumenschalenfasern ein Materialinnendruck entsteht, der der Schwindung entgegenwirkt.

In eigenen Untersuchungen hat sich gezeigt, dass die bislang übliche Vorgehensweise zum Zubereiten trockener Sonnenblumenschalenfasern, bei der ausgehend von Sonnenblumenschalen eine Vermahlung und Trocknung durchgeführt wird, die mit Temperaturen von deutlich über 200 °C verbunden ist, mit dem erfindungsgemäßen Verfahren deutlich bessere Ergebnisse hinsichtlich der vorgenannten Aspekte erreicht werden. Insbesondere ist die Schwindung der resultierenden Spritzgussprodukte niedriger, kann die Zykluszeit verringert werden, wird das Bauteilgewicht verringert und dabei die Festigkeit bewahrt. Die Erfinder der vorliegenden Erfindung haben erkannt, dass die Wahl einer vergleichsweise niedrigen Verarbeitungstemperatur günstig ist, wenn Sonnenblumenschalenfasern zur Verwendung in einem Spritzgussverfahren hergestellt werden sollen. Sie haben sich damit von der bislang vorherrschenden Auffassung gelöst, dass die Zusammensetzung (insbesondere in chemischer Hinsicht) der Sonnenblumenschalenfasern nicht von Relevanz ist für die folgenden Verarbeitungsschritte.

Vorzugsweise ist im erfindungsgemäßen Verfahren die Differenz $\Delta T$ zwischen der Temperatur $T_{IM}$ und der höheren der beiden Temperaturen $T_{PFmax}$ und $T_{PCmax}$ größer als 20 °C, vorzugsweise größer als 40 °C.

Der Begriff $T_{PFmax}$ bedeutet dabei die maximale Temperatur der Sonnenblumenschalenfasern bei ihrer Herstellung mittels Verarbeitung von Sonnenblumenschalen (Schritt (a)).

Der Begriff $T_{PCmax}$ bedeutet dabei die maximale Temperatur in der Mischung beim Vermischen der in Schritt (a) hergestellten Sonnenblumenschalenfasern mit dem Kunststoffmaterial (Schritt (b)).

Der Begriff $T_{IM}$ bedeutet dabei die Temperatur des in das Spritzgießwerkzeug eingebrachten Kompositwerkstoffs in einem definierten Abschnitt des Spritzgießwerkzeugs.

Wie bereits weiter oben ausgeführt, zersetzen sich Sonnenblumenschalenfasern bei Temperaturen von größer als 200 °C. Der Zersetzungsprozess nimmt dabei mit zunehmender Temperatur hinsichtlich seiner Geschwindigkeit und hinsichtlich des Ausmaßes der Zersetzung zu. Je größer die Differenz $\Delta T$ zwischen der Temperatur $T_{IM}$ in zumindest einem Abschnitt des Spritzgießwerkzeugs und der höheren der beiden Temperaturen $T_{PFmax}$ und $T_{PCmax}$ ist, desto ausgeprägter wird der Effekt, der in dem zumindest einen Abschnitt des Spritzgießwerkzeugs durch den Einsatz der schonend hergestellten Sonnenblumenschalenfasern vermittelt wird. In eigenen Untersuchungen hat sich gezeigt, dass eine Temperaturdifferenz $\Delta T > 20\,°C$ aus der Perspektive des Fachmanns häufig bereits einen überraschenden und überzeugenden Effekt bewirkt, insbesondere hinsichtlich der Reduzierung von Schwindungen (insbesondere Einfallstellen). Besonders ausgeprägt sind die Effekte ab einer Temperaturdifferenz $\Delta T > 40\,°C$.

Es versteht sich, dass die Differenz $\Delta T$ bezogen auf zumindest einen Abschnitt des Spritzgießwerkzeugs immer dann größer ist als 20 °C, wenn keiner der Werte $T_{PFmax}$ beziehungsweise $T_{PCmax}$ größer ist als 180 °C, denn die Temperatur $T_{IM}$ (wie oben definiert) ist ja in zumindest einem Abschnitt des Spritzgießwerkzeugs größer als 200 °C.

Andererseits ist die Differenz $\Delta T$ bezogen auf zumindest einen Abschnitt des Spritzgießwerkzeugs auch immer dann größer als 20 °C, wenn in diesem zumindest einen Abschnitt des Spritzgießwerkzeugs in Schritt (c) eine Temperatur $T_{IM}$ (wie oben definiert) von größer als 220 °C vorliegt.

Analoge Überlegungen gelten für die bevorzugte Differenz $\Delta T$ von größer als 40°C.

Besonders bevorzugt besitzt in Schritt (c) eines erfindungsgemäßen Verfahrens der in das Spritzgießwerkzeug eingebrachte Kompositwerkstoff in zumindest einem Abschnitt des Spritzgießwerkzeugs eine Temperatur $T_{IM}$ von größer als 220 °C, vorzugsweise von größer als 240 °C. Wie vorstehend bereits dargelegt, wird der Fachmann im Einzelfall Temperaturen wählen, die den angestrebten Effekt unter Einsatz der zur Verfügung stehenden Mittel in einfacher Weise erreichen lassen. In vielen Fällen ist es ebenso möglich, bei einer vergleichsweise geringen Menge an eingesetzten Sonnenblumenschalenfasern durch eine besonders hohe Temperatur $T_{IM}$ in zumindest einem Abschnitt des Spritzgießwerkzeugs einen angestrebten Effekt zu erreichen, wie es möglich ist, bei Einsatz von vergleichsweise großen Mengen an Sonnenblumenschalenfasern und einer vergleichsweise geringen Temperatur $T_{IM}$ in eben diesem Abschnitt des Spritzgießwerkzeugs den angestrebten Effekt zu erreichen.

Sofern das Spritzgießwerkzeug einen oder mehrere Abschnitte besitzt, der beziehungsweise die eine Wanddicke des Produkts von 4 mm oder mehr definiert beziehungsweise definieren, ist es besonders vorteilhaft, wenn der in das Spritzgießwerkzeug eingebrachte Kompositwerkstoff (in Schritt (c)) eine Temperatur $T_{IM}$ von größer als 200 °C in zumindest einem dieser Abschnitte des Spritzgießwerkzeugs besitzt. Wie bereits weiter oben erläutert, sind insbesondere Bereiche von Spritzgussprodukten mit einer Wanddicke von 4 mm oder mehr anfällig für Schwindungen und Einfallstellen. In Schritt (c) eines erfindungsgemäßen Verfahrens wird vorzugsweise sichergestellt, dass gerade in solchen Abschnitten des Spritzgießwerkzeugs, die eine entsprechende Wanddicke des Produkts definieren, zumindest abschnittsweise eine Temperatur $T_{IM}$ von größer als 200 °C erreicht wird.

In einem erfindungsgemäßen Verfahren umfasst das Spritzgussprodukt vorzugsweise einen teilkristallinen Thermoplasten. Wie bereits vorstehend erläutert, führt der Einsatz von Kunststoffen, die beim Aushärten kristalline Bereiche ausbilden können, in der bisherigen Praxis besonders häufig zu unerwünschten Schwindungen und Einfallstellen. Im Rahmen der vorliegenden Erfindung werden besonders deutliche Verbesserungen bei der Herstellung eben solcher Spritzgussprodukte erreicht, die einen teilkristallinen Thermoplasten umfassen. Es ist erfindungsgemäß nicht erforderlich, aber auch nicht ausgeschlossen, dass geformte Kompositwerkstoffe (als Produkt von Schritt (c) eines erfindungsgemäßen Verfahrens) besonders schnell abgekühlt werden, um die Ausbildung kristalliner Bereiche im resultierenden Produkt zu verhindern. Im Gegenteil hat sich aufgrund eigener Untersuchungen die Einschätzung herausgebildet, dass die beim Kristallisieren freiwerdende Kristallisationswärme in vorteilhafter Weise die Freisetzung (zusätzlicher) Gase aus den eingesetzten Sonnenblumenschalenfasern fördert.

Wenngleich besonders gute Ergebnisse erzielt werden, sofern das Spritzgussprodukt des erfindungsgemäßen Verfahrens einen teilkristallinen Thermoplasten umfasst, ist der Einsatz solcher Kunststoffmaterialien im erfindungsgemäßen Verfahren nicht vollständig ausgeschlossen, die beim Erstarren keine kristallinen Bereiche ausbilden. Vielmehr hat sich der Einsatz des erfindungsgemäßen Verfahrens auch bei sogenannten amorphen Kunststoffen wie Acrylnitril-Butadien-Styrol (ABS) bewährt.

Erfindungsgemäße Verfahren sind besonders bevorzugt, bei denen das Spritzgussprodukt einen teilkristallinen Thermoplasten umfasst, der ausgebildet ist aus der Gruppe bestehend aus Polypropylen (PP), Polyethylen (PE) und Polymilchsäure (PLA).

Der Einsatz anderer Kunststoffe, die zu teilkristallinen Thermoplasten führen, ist ebenfalls bevorzugt. Insoweit bevorzugt sind die Kunststoffe Polyoxymethylen (POM), Polyamid (PA), Polyethylenterephthalat (PET), Polybutylenterephthalat (PBT) und Polytetrafluorethylen (PTFE).

Sofern das Spritzgussprodukt in bevorzugten Ausgestaltungen des erfindungsgemäßen Verfahrens (i) einen teilkristallinen Thermoplasten umfasst, umfasst es üblicherweise auch (ii) Blasen, erzeugt durch aus den Sonnenblumenschalenfasern in Schritt (c) freigesetzte Gase. Bei Untersuchungen an entsprechenden Spritzgussprodukten zeigt sich, dass das von Blasen eingenommene Volumen regelmäßig in solchen Abschnitten des Spritzgussproduktes besonders groß ist, die Abschnitten des Spritzgießwerkzeugs entsprechen, in denen bei Durchführung des Verfahrens (Schritt (c)) besonders hohe Temperaturen $T_{IM}$ (wie oben definiert) herrschten.

In einem erfindungsgemäßen Verfahren, in dem das Spritzgussprodukt einen teilkristallinen Thermoplasten umfasst, vorzugsweise in bevorzugten Ausgestaltungen eines solchen Verfahrens, wird vorzugsweise in Schritt (a) die maximale Temperatur $T_{PFmax}$ von weniger als 200 °C so gewählt und wird vorzugsweise in Schritt (b) die maximale Temperatur $T_{PCmax}$ von weniger als 200 °C so gewählt und werden vorzugsweise außerdem in Schritt (b) die Sonnenblumenschalenfasern in einer solchen Menge eingesetzt, dass das Spritzgussprodukt eine Schwindung von weniger als 1,8 % besitzt, vorzugsweise von weniger als 1,5 %, besonders bevorzugt von weniger als 1,0 %.

Die Schwindung ist hierbei gemäß der nachstehenden Formel zu berechnen:

$$\text{Schwindung} = 100 \text{ \% x (Maß des Spritzgusswerkzeugs – Maß Spritzgussprodukt) / Maß des Spritzgusswerkzeugs}$$

In bevorzugten erfindungsgemäßen Verfahren umfasst Schritt (a) das Trocknen der Sonnenblumenschalen und/oder der Sonnenblumenschalenfasern. Üblicherweise werden die Sonnenblumenschalen und/oder die Sonnenblumenschalenfasern zum Zwecke des Trocknens einer Wärmebehandlung unterzogen, wobei jedoch erfindungsgemäß weiterhin gilt, dass die maximale Temperatur $T_{PFmax}$ weniger als 200 °C beträgt. Zu bevorzugten Ausgestaltungen sei auf die obigen Ausführungen verwiesen. Zum Aspekt der Trocknung auf einen gewünschten Wassergehalt verweisen wir auf das Dokument WO 2013/072146 sowie auf das Dokument WO 2014/184273.

Die Erfindung betrifft auch ein Spritzgussprodukt, das durch ein erfindungsgemäßes Herstellverfahren herstellbar ist, wie es in Anspruch 8 definiert ist. Ein solches Spritzgussprodukt lässt sich regelmäßig an der Anwesenheit charakteristischer Blasen identifizieren, die insbesondere in Nachbarschaft zu eingebetteten Sonnenblumenschalenfasern und in solchen Abschnitten vorliegen, in denen die Temperatur des Kompositwerkstoffs in Schritt (c) des erfindungsgemäßen Verfahrens besonders hoch war. Bei Durchführung von vorstehend angegebenen bevorzugten Ausgestaltungen eines erfindungsgemäßen Herstellverfahrens ergeben sich weitere charakteristische Produkteigenschaften.

Erfindungsgemäße Spritzgussprodukte sind insbesondere geeignet für den Einsatz als Elemente von Möbeln, Bauten und Bauzubehör.

Die Erfindung betrifft auch die Verwendung von bei einer maximalen Temperatur $T_{PFmax}$ von weniger als 200 °C aus Sonnenblumenschalen zubereiteten Sonnenblumenschalenfasern als Additiv in einem spritzgießfähigen Kompositwerkstoff zur Verminderung der Schwindung beim maschinellen Spritzgießen des Kompositwerkstoffs in ein Spritzgießwerkzeug. Hinsichtlich bevorzugter Ausgestaltungen einer solchen Verwendung gelten die für das erfindungsgemäße Verfahren angegebenen Erläuterungen entsprechend.

Das Produkt des Verfahrensschrittes (a) des erfindungsgemäßen Verfahrens wird im Rahmen der erfindungsgemäßen Verwendung als Additiv eingesetzt und dient dazu, die Schwindung beim maschinellen Spritzgießen zu vermindern.

Dieser Aspekt der Erfindung beruht auf der überraschenden Erkenntnis, dass derart zubereitete Sonnenblumenschalenfasern ganz besondere Eigenschaften mit sich bringen und dazu beitragen, angestrebte Produkteigenschaften gezielt einzustellen. Auf die detaillierten Ausführungen weiter oben wird verwiesen.

Bevorzugt ist eine erfindungsgemäße Verwendung, wobei beim maschinellen Spritzgießen in zumindest einem Abschnitt des Spritzgießwerkzeugs eine Temperatur $T_{IM}$ des Kompositwerkstoffs von größer als 200 °C vorliegt. Hinsichtlich der hiermit verbundenen Effekte und hinsichtlich bevorzugter Ausgestaltungen verweisen wir auf die obigen Ausführungen zum erfindungsgemäßen Verfahren.

Bevorzugt ist eine erfindungsgemäße Verwendung, wobei Sonnenblumenschalenfasern als Additiv eingesetzt werden, die bei einer Temperatur von größer als 200 °C Gase freisetzen. Dies bedeutet, dass die eingesetzten Sonnenblumenschalenfasern überall dort im Spritzgießwerkzeug Gase freisetzen und Blasen bilden werden, wo die Temperatur $T_{IM}$ des Kompositwerkstoffs größer ist als 200 °C.

Nachfolgend wird die Erfindung anhand eines Beispiels näher erläutert:

Es wurden zwei Komposite (Komposit 1 und Komposit 2) hergestellt, deren jeweilige Rezepturen sich lediglich in der Art der Zubereitung der jeweils eingesetzten Sonnenblumenschalenfasern unterschieden. Komposit 1 ist zur Durchführung eines erfindungsgemäßen Beispiels bestimmt; Komposit 2 ist zur Durchführung eines nicht erfindungsgemäßen Beispiels bestimmt.

Die Rezeptur der Komposite 1 und 2 ist nachfolgend angegeben (Gewichtsprozentangaben sind auf das Gesamtgewicht der Mischung bezogen):

| 63,7 Gew.-% | Polypropylencopolymer (Handelsprodukt der Fa. Borealis) |
| 35 Gew.-% | Sonnenblumenschalenfasern (unterschiedliche Zubereitung für Komposite 1 bzw. 2, siehe unten) |
| 1 Gew.-% | Haftvermittler (Licocene PP MA 7452 GR TP) |
| 0,2 Gew.-% | Prozessstabilisator (Irgafos 168) |
| 0,1 Gew.-% | Wärmestabilisator (Irganox 1076) |

Komposit 1 umfasst Sonnenblumenschalenfasern, die im Einklang mit den Erfordernissen des Verfahrensschrittes (a) des erfindungsgemäßen Verfahrens aus Sonnenblumenschalen hergestellt wurden, nämlich bei einer maximalen Verarbeitungstemperatur $T_{PFmax}$ von 195°C.

Komposit 1 wurde im Einklang mit Verfahrensschritt (b) des erfindungsgemäßen Verfahrens hergestellt durch Vermischen der in Schritt (a) hergestellten Sonnenblumenfasern mit den vorstehend angegebenen weiteren Rezeptur-Bestandteilen des Komposits (Polypropylencopolymer, Haftvermittler, Prozessstabilisator, Wärmestabilisator). Die Vermischungstemperatur betrug hierbei ebenfalls 195°C.

Der so hergestellte spritzgießfähige Kompositwerkstoff "Komposit 1" wurde maschinell in ein Spritzgießwerkzeug mit quaderförmigem Hohlraum eingespritzt, sodass ein geformter Spritzgussklotz resultierte.

Der in das Spritzgießwerkzeug eingebrachte Kompositwerkstoff "Komposit 1" besaß zumindest in einzelnen Abschnitten des Spritzgießwerkzeugs (quaderförmiger Hohlraum) eine Temperatur $T_{IM}$ von ca. 220°C.

Der geformte Kompositwerkstoff "Komposit 1" wurde als fertiges Spritzgussprodukt dem Spritzgießwerkzeug entnommen und die Abmessungen (Höhe, Breite, Länge) des annähernd quaderförmigen Spritzgussprodukts wurden bestimmt.

Die entsprechende Untersuchung wurde fünfmal wiederholt (Beispiele 1.1 bis 1.5). Der Mittelwert der jeweiligen Messungen und die Einzelmessungen sind in der nachfolgenden Tabelle 1 angegeben.

Auf analoge Weise wurden Untersuchungen für "Komposit 2" durchgeführt. Sämtliche Parameter der Untersuchung wurden genauso gewählt wie für "Komposit 1" vorstehend angegeben, mit einer einzigen Abweichung: Komposit 2 umfasst Sonnenblumenschalenfasern, die entgegen den Erfordernissen des Verfahrensschrittes (a) des erfindungsgemäßen Verfahrens bei einer maximalen Verarbeitungstemperatur $T_{PFmax}$ von 220°C aus Sonnenblumenschalen hergestellt wurden.

Auch für Komposit 2 wurden die zu Komposit 1 genannten Messungen durchgeführt und Mittelwerte bestimmt. Die Resultate sind in der nachfolgenden Tabelle angegeben.

Die nachfolgende Tabelle umfasst einen Block "Vergleich", in dem die Mittelwerte für "Komposit 1" und "Komposit 2" eingetragen sind. In einer zusätzlichen Spalte ist der "Schwindungsunterschied in betrachteter räumlicher Dimension" angegeben, das heißt, die Differenz zwischen dem jeweiligen "Mittelwert Komposit 1" und dem jeweiligen "Mittelwert Komposit 2". Es ergibt sich, dass "Komposit 1" in jeder Raumrichtung einen größeren Mittelwert besitzt und "Komposit 2" im Vergleich dazu einen jeweils kleineren Mittelwert. Dies bedeutet, dass aus "Komposit 2" ein Spritzgussprodukt resultierte, welches beim Abkühlen einer stärkeren Schwindung unterlag; die Verfahrensgestaltung zu Komposit 2 und das damit erhaltene Spritzgußprodukt sind nicht erfindungsgemäß.

Die Spalte "Schwindung in betrachteter räumlicher Dimension / %" schließt Tabelle 1 ab; angegeben ist die jeweilige Schwindung im Vergleich von "Komposit 2" mit "Komposit 1". Die angegebenen Schwindungswerte wurden nach der folgenden Formel kalkuliert:

Schwindung in betrachteter räumlicher Dimension = 100% x (Mittelwert Komposit 1 in betrachteter räumlicher Dimension – Mittelwert Komposit 2 in betrachteter räumlicher Dimension) / Mittelwert Komposit 2 in betrachteter räumlicher Dimension

Zusammenfassend ist festzustellen, dass bei erfindungsgemäßer Verfahrensgestaltung, das heißt bei Verwendung des Komposit 1, Spritzgussklötze erhalten wurden, die einer geringeren Schwindung unterlagen, im Vergleich mit einer nicht erfindungsgemäßen Verfahrensgestaltung, das heißt bei Verwendung von Komposit 2.

Tabelle 1:

| Komposit 1 (erfindungsgemäß) | Beispiel 1.1 | Beispiel 1.2 | Beispiel 1.3 | Beispiel 1.4 | Beispiel 1.5 | Mittelwert |
|---|---|---|---|---|---|---|
| Höhe / mm | 20,1 | 20,1 | 19,9 | 20,2 | 20,2 | 20,10 |
| Breite / mm | 29,8 | 29,5 | 29,85 | 29,9 | 29,5 | 29,71 |
| Länge / mm | 79,5 | 79,1 | 79,5 | 79,65 | 79,1 | 79,37 |
| $T_{PFmax}$ (in Schritt (a)): 195°C | | | | | | |
| | | | | | | |

(fortgesetzt)

| Komposit 2 (nicht erfindungsgemäß) | Beispiel 2.1 | Beispiel 2.2 | Beispiel 2.3 | Beispiel 2.4 | Beispiel 2.5 | Mittelwert |
|---|---|---|---|---|---|---|
| Höhe / mm | 19,7 | 19,9 | 19,8 | 20,0 | 20,0 | 19,88 |
| Breite / mm | 28,9 | 29,2 | 28,9 | 29,2 | 29,25 | 29,09 |
| Länge / mm | 78,4 | 78,65 | 78,45 | 78,75 | 78,7 | 78,59 |

$T_{PFmax}$ (in Schritt a)): 220°C

| Vergleich | Mittelwerte Komposit 1 | Mittelwerte Komposit 2 | Schwindungsunterschied in betrachteter räumlicher Dimension | | Schwindung in betrachteter räumlicher Dimension / % |
|---|---|---|---|---|---|
| Höhe / mm | 20,10 | 19,88 | 0,22 | | 1,11 |
| Breite / mm | 29,71 | 29,09 | 0,62 | | 2,13 |
| Länge / mm | 79,37 | 78,59 | 0,78 | | 0,99 |

Sobald in der vorliegenden Anmeldung von der Wandungsdicke die Rede ist, ist damit auch die Wanddicke gemeint, soweit der Begriff Verdichtungsdruck verwendet wird so ist damit auch der Nachdruck gemeint, soweit der Begriff Verdichtungszeit verwendet wird ist damit auch die Nachdruckzeit gemeint.

Wie bereits in der Beschreibungseinleitung ausgeführt, haben eigene Untersuchungen gezeigt, dass überraschenderweise ab einer Temperatur von 200°C eine irreversible Zersetzung von Bestandteilen von Sonnenblumenschalenfasern stattfindet, die in beträchtlichem Maße zur Freisetzung von Gasen führt.

In einer nachfolgenden Tabelle ist dies auch quantitativ aufgezeigt, wobei die Tabelle zu einem zugehörigen Temperaturwert einen Wert für die absolute Emission und - was noch wichtiger ist - eine relative Emission bezogen auf 180°C aufzeigt, wobei die Werte für die relative Emission normiert sind auf den Wert 180°C (deshalb ist bei die relative Emission bei 180°C auf den Normwert 1 gesetzt):

| Relative Veränderung der Gasemission in Abhängigkeit der Temperatur von Sonnenblumenschalen bezogen auf die Emission bei 180°C | | |
|---|---|---|
| Temperatur / °C | Absolute Emission | Relative Emission bezogen auf 180°C (normiert) |
| 180 | 0,34 | 1,00 |
| 190 | 2,88 | 8,47 |
| 200 | 4,29 | 12,62 |
| 210 | 5,86 | 17,24 |
| 220 | 10,98 | 32,29 |

Zur Erstellung dieser Untersuchung wurde folgender Versuchsaufbau verwendet:

Einerseits wurden jeweils rund 25 mg einer Probe (Sonnenblumenbiokunststoffkomposit) bei 180°C, 190°C, 200°C, 210°C und 220°C im TD100 (Markes) für 15 Minuten direkt desorbiert und die und die Emissionen dabei auf einer Kühlfläche gefangen und aufkonzentriert. Andererseits wurden rund 1g der Probe in einem 20mL Headspacevial vorgelegt, dieses für 15min bei 200°C thermisch belastet und im Anschluss der Headspaceraum mittels gasdichter Spritze (150°C, 250$\mu$L) beprobt. Die Emissionen beider Beprobungsarten wurden mittels GC-MS analysiert, wobei systembedingt bei der Headspacemessung eine kürzere Säule (30m) verwendet wurde.

Ergebnisbewertung:

Die steigende Desorptionstemperatur zeigt nur einen sehr geringen Einfluss auf die aus dem verwendeten Polypropylen (PP) stammenden Kohlenwasserstoffemissionen (Peakgruppen ab ca. 25min). Deren Konzentration ist bei allen Proben relativ konstant, wobei es bei höheren Desorptionstemperaturen zu einer Zunahme der höhermolekularen Kohlenwasserstoffe kommt. Bei 180°C und 190°C waren nur geringe zusätzliche Emissionen detektierbar, ab 200°C aber eine deutliche Zunahme an emittierten Substanzen erkennbar. Dies ist insbesondere auf die Entgasung der Sonnenblumenschalenfaserbestandteile zurückzuführen, insbesondere auf die noch in der Schalenfaser vorliegenden längerkettigen Fettsäuren, die bei diesen Temperaturen aus der Probe desorbieren. Wenn man mit einem Summenintegral den Anteil des Bereiches zwischen 0min und 25min an den gemessenen Gesamtemissionen berechnet, ergeben sich bei 180°C 0,34%, bei 190°C 2,88%, bei 200°C 4,29%, bei 210°C 5,86% und schließlich bei 220°C rund 10,98%. Die Emissionen an flüchtigen, niedermolekularen Substanzen nehmen also zwischen 180°C und 220°C um mehr als den Faktor 30 zu.

Die Emissionen stammen dabei mit hoher Wahrscheinlichkeit aus dem Abbau der Biomasse (Sonnenblumenschalenfaser). Neben den zu erwartenden Abbauprodukten der Hemicellulosen wie Essigsäure, Furfural und Hydroxymethylfurfural waren bei 210°C und 220°C auch Substanzen wie Vanillin, Coniferylaldehyd und Coniferylalkohol, die eventuell während der Depolymerisation von Lignin gebildet werden, nachweisbar. Die Erhöhung der Desorptionstemperatur von 180°C auf 220°C führt zu rund 15fach höheren Essigsäureemissionen und die Furfuralemissionen nahmen um den Faktor 40 zu. Auch konnten Emissionen schwefelhaltige Verbindungen und Pyrrolderivate in geringen Mengen nachgewiesen werden.

**Patentansprüche**

1. Verfahren zur Herstellung eines Spritzgußproduktes, umfassend die folgenden Schritte:

    (a) Verarbeiten von Sonnenblumenschalen zu Sonnenblumenschalenfasern, bei einer maximalen Temperatur $T_{PFmax}$ von weniger als 200°C,
    (b) Herstellen eines spritzgießfähigen Kompositwerkstoffs durch Vermischen der in Schritt (a) hergestellten Sonnenblumenschalenfasern mit einem Kunststoffmaterial, bei einer maximalen Temperatur $T_{PCmax}$ von weniger als 200°C,
    (c) maschinelles Spritzgießen des hergestellten spritzgießfähigen Kompositwerkstoffs in ein Spritzgießwerkzeug, so dass ein geformter Kompositwerkstoff resultiert, wobei der in das Spritzgießwerkzeug eingebrachte Kompositwerkstoff in zumindest einem Abschnitt des Spritzgießwerkzeugs eine Temperatur $T_{IM}$ von größer als 200°C besitzt,
    (d) Entformen des geformten Kompositwerkstoffs, so dass das Spritzgußprodukt resultiert.

2. Verfahren nach Anspruch 1, wobei die Differenz $\Delta T$ zwischen der Temperatur $T_{IM}$ in zumindest einem Abschnitt des Spritzgießwerkzeugs und der höheren der beiden Temperaturen $T_{PFmax}$ und $T_{PCmax}$ größer ist als 20 °C.

3. Verfahren nach einem der Ansprüche 1 bis 2, wobei der in das Spritzgießwerkzeug eingebrachte Kompositwerkstoff eine Temperatur $T_{IM}$ von größer als 200 °C in zumindest einem Abschnitt des Spritzgießwerkzeugs besitzt, der eine Wandungsdicke des Produkts von 4 mm oder mehr definiert.

4. Verfahren nach einem der Ansprüche 1 bis 3, wobei das Spritzgußprodukt einen teilkristallinen Thermoplasten umfasst.

5. Verfahren nach einem der Ansprüche 1 bis 4, wobei das Spritzgußprodukt einen teilkristallinen Thermoplasten umfasst, der ausgewählt ist aus der Gruppe bestehend aus Polypropylen (PP), Polyethylen (PE) und Polymilchsäure (PLA).

6. Verfahren nach einem der Ansprüche 4 bis 5, wobei das Spritzgußprodukt umfasst:

    (i) einen teilkristallinen Thermoplasten
    sowie
    (ii) Blasen, erzeugt durch aus den Sonnenblumenschalenfasern in Schritt (c) freigesetzte Gase.

7. Verfahren nach einem der vorangehenden Ansprüche, wobei Schritt (a) das Trocknen der Sonnenblumenschalen und/oder der Sonnenblumenschalenfasern umfasst.

8. Spritzgußprodukt, hergestellt durch ein Herstellverfahren nach einem der Ansprüche 1 bis 7, wobei das Spritzgußprodukt eine Schwindung von weniger als 1,8% besitzt.

**9.** Verwendung von bei einer maximalen Temperatur $T_{PFmax}$ von weniger als 200 °C aus Sonnenblumenschalen zubereiteten Sonnenblumenschalenfasern als Additiv in einem spritzgießfähigen Kompositwerkstoff zur Verminderung der Schwindung beim maschinellen Spritzgießen des Kompositwerkstoffs in ein Spritzgießwerkzeug.

**10.** Verwendung nach Anspruch 9 wobei beim maschinellen Spritzgießen in zumindest einem Abschnitt des Spritzgießwerkzeugs eine Temperatur $T_{IM}$ des Kompositwerkstoffs von größer als 200 °C vorliegt.

**Claims**

**1.** A method for producing an injection molded product, comprising the steps of:

(a) processing sunflower hulls to afford sunflower hull fibers at a maximum temperature $T_{PFmax}$ of less than 200°C,
(b) producing an injection moldable composite material by mixing the sunflower hull fibers produced in step (a) with a plastics material at a maximum temperature $T_{PCmax}$ of less than 200°C,
(c) automatically injection molding the produced injection moldable composite material into an injection mold to afford a molded composite material, wherein the composite material introduced into the injection mold has a temperature $T_{IM}$ of greater than 200°C in at least one section of the injection mold,
(d) demolding the molded composite material to afford the injection molded product.

**2.** The method as claimed in claim 1, wherein the difference $\Delta T$ between the temperature $T_{IM}$ in at least one section of the injection mold and the higher of the two temperatures $T_{PFmax}$ and $T_{PCmax}$ is greater than 20°C.

**3.** The method as claimed in any of claims 1 to 2, wherein the composite material introduced into the injection mold has a temperature $T_{IM}$ of greater than 200°C in at least one section of the injection mold which defines a wall thickness of the product of 4 mm or more.

**4.** The method as claimed in any of claims 1 to 3, wherein the injection molded product comprises a semicrystalline thermoplastic.

**5.** The method as claimed in any of claims 1 to 4, wherein the injection molded product comprises a semicrystalline thermoplastic selected from the group consisting of polypropylene (PP), polyethylene (PE) and polylactic acid (PLA).

**6.** The method as claimed in either of claims 4 and 5, wherein the injection molded product comprises:

(i) a semicrystalline thermoplastic
and
(ii) bubbles generated by gases liberated from the sunflower hull fibers in step (c).

**7.** The method as claimed in any of the preceding claims, wherein step (a) comprises drying the sunflower hulls and/or the sunflower hull fibers.

**8.** An injection molded product produced by a production method according to any of claims 1 to 7, wherein the injection molded product has a shrinkage of less than 1.8%.

**9.** The use of sunflower hull fibers prepared from sunflower hulls at a maximum temperature $T_{PFmax}$ of less than 200°C as an additive in an injection moldable composite material for reducing shrinkage in automatic injection molding of the composite material into an injection mold.

**10.** The use as claimed in claim 9, wherein during automatic injection molding a temperature $T_{IM}$ of the composite material of greater than 200°C prevails in at least one section of the injection mold.

**Revendications**

**1.** Procédé de fabrication d'un produit moulé par injection, comprenant les étapes suivantes :

(a) le traitement de coques de graines de tournesol en fibres de coques de graines de tournesol, à une température maximale $T_{PFmax}$ inférieure à 200 °C,

(b) la fabrication d'un matériau composite pouvant être moulé par injection par mélange des fibres de coques de graines de tournesol fabriquées à l'étape (a) à un plastique, à une température maximale $T_{PCmax}$ inférieure à 200 °C,

(c) le moulage mécanique par injection du matériau composite pouvant être moulé par injection fabriqué dans un moule d'injection de sorte qu'il en résulte un matériau composite moulé, dans lequel le matériau composite introduit dans le moule d'injection possède dans au moins une partie du moule d'injection une température $T_{IM}$ supérieure à 200 °C,

(d) le démoulage du matériau composite moulé de sorte qu'il en résulte le produit moulé par injection.

2. Procédé selon la revendication 1, dans lequel la différence $\Delta T$ entre la température $T_{IM}$ dans au moins une partie du moule d'injection et la plus élevée des deux températures $T_{PFmax}$ et $T_{PCmax}$ est supérieure à 20 °C.

3. Procédé selon l'une quelconque des revendications 1 à 2, dans lequel le matériau composite introduit dans le moule d'injection possède une température $T_{IM}$ supérieure à 200 °C dans au moins une partie du moule d'injection, qui définit une épaisseur de paroi du produit de 4 mm ou plus.

4. Procédé selon l'une quelconque des revendications 1 à 3, dans lequel le produit moulé par injection comprend un thermoplaste en partie cristallin.

5. Procédé selon l'une quelconque des revendications 1 à 4, dans lequel le produit moulé par injection comprend un thermoplaste en partie cristallin, qui est sélectionné dans le groupe constitué de polypropylène (PP), polyéthylène (PE) et acide polylactique (PLA).

6. Procédé selon l'une quelconque des revendications 4 à 5, dans lequel le produit moulé par injection comprend :

(i) un thermoplaste en partie cristallin
ainsi que
(ii) des bulles, générées par des gaz libérés des fibres de coques de graines de tournesol à l'étape (c).

7. Procédé selon l'une quelconque des revendications précédentes, dans lequel l'étape (a) comprend le séchage des coques de graines de tournesol et/ou des fibres de coques de graines de tournesol.

8. Produit moulé par injection, fabriqué par un procédé de fabrication selon l'une quelconque des revendications 1 à 7, dans lequel le produit moulé par injection possède un retrait inférieur à 1,8 %.

9. Utilisation de fibres de coques de graines de tournesol préparées à partir de coques de graines de tournesol à une température maximale $T_{PFmax}$ inférieure à 200 °C en tant qu'additif dans un matériau composite pouvant être moulé par injection pour diminuer le retrait lors du moulage mécanique par injection du matériau composite dans un moule d'injection.

10. Utilisation selon la revendication 9, dans laquelle, lors du moulage mécanique par injection, une température $T_{IM}$ du matériau composite supérieure à 200 °C est présente dans au moins une partie du moule d'injection.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013072146 A1
- WO 2014184273 A1
- WO 2013072146 A
- WO 2014184273 A